**Europäisches Patentamt**

**European Patent Office**

**Office européen des brevets**

(19)

(11) Publication number: **0 166 300**
**A2**

# (12) EUROPEAN PATENT APPLICATION

(21) Application number: **85107188.6**

(22) Date of filing: **11.06.85**

(51) Int. Cl.⁴: **G 01 S 5/14**

(30) Priority: **13.06.84 JP 121091/84**

(43) Date of publication of application: **02.01.86**
**Bulletin 86/1**

(84) Designated Contracting States: **AT DE FR GB NL**

(71) Applicant: **SONY CORPORATION,**
**7-35 Kitashinagawa 6-Chome Shinagawa-ku,**
**Tokyo 141 (JP)**

(72) Inventor: **Kikuchi, Atsushi, c/o Sony**
**Corporation 7-35 Kitashinagawa 6-chome, Shinagawa-ku**
**Tokyo (JP)**
Inventor: **Kageyama, Koji, c/o Sony**
**Corporation 7-35 Kitashinagawa 6-chome, Shinagawa-ku**
**Tokyo (JP)**

(74) Representative: **Patentanwälte TER MEER - MÜLLER -**
**STEINMEISTER, Mauerkircherstrasse 45,**
**D-8000 München 80 (DE)**

(54) **Receiver for global positioning system and method for determining position of a stationary station using same.**

(57) A GPS receiver (10, 20, 50) sets up an equation based on known position data and propagation delay time data transmitted from two satellites and received simultaneously, and independent of time epoch errors in the clocks of the satellites and the receiver. The receiver accumulates equations as data is received. The position of the receiver station can then be derived from the accumulated equations. In order to enable the foregoing process, the GPS receiver is provided with a timer which is reset at the timing of transmission of the epoch signals from satellites so as to measure the signal propagation interval by latching the timer value upon receipt of each satellite signal. In practice, the receiver uses the following equations:

$$\{(x_{1j} - x)^2 + (y_{1j} - y)^2 + (z_{1j} - z)^2\}^{1/2} -$$
$$\{(x_{2j} - x)^2 + (y_{2j} - y)^2 + (z_{2j} - z)^2\}^{1/2}$$
$$= (T_{1j} - T_{2j}).c$$

where $x_{1j}, y_{1j}, z_{1j}$ are known coordinates of a first satellite; $x_{2j}, y_{2j}, z_{2j}$ are known coordinates of the second satellite; $T_{1j}$ and $T_{2j}$ are respectively measured propagation delay times of the first and second satellite, $t_j$ is a constant indicative of timing errors; and c is the velocity of light.

ACTORUM AG

RECEIVER FOR GLOBAL POSITIONING SYSTEM AND METHOD FOR
DETERMINING POSITION OF A STATIONARY STATION USING SAME

## BACKGROUND OF THE INVENTION

The present invention relates generally to a receiver for a navigation system utilizing satellites or other spacecraft, the so-called Global Positioning System (GPS) or NAVSTAR. More specifically, the invention relates to a receiver which is designed for use with GPS in determining the position of a stationary station without being affected by error in clocks on the satellite and/or in the receiver.

GPS or NAVSTAR, presently under development, will enable precise positioning anywhere on the Earth by means of a network of 18 satellites when it is completed. Each satellite is designed to transmit pseudo-random ranging signals from which users with receivers will obtain three-dimensional location, velocity and timing information anywhere on or near the surface of the Earth.

Position determination utilizing GPS or NAVSTAR has been disclosed in the United State Patent 4,114,155, issued on September 12, 1978, to Raab, among others. The disclosed apparatus and method are intended to enable positioning of a receiver on the basis of a plurality of pseudo-random data sequences from a plurality of sources of known position. The disclosed invention is also intended to improve the precision of the determined position of a receiver to within 300 meters.

Arithmetic deviation of the position of a receiver station is well provided for in GPS. A three-dimensional Cartesian coordinate system with its origin at the center of the Earth is used. In this coordinate system, the known position of each satellite can be represented as an ordered triplet $P_i$ ($x_i$, $y_i$,

$z_i$), where i = 1 to 18. Similarly, the position of the receiver station can be represented as P(x, y, z). Thus, the distance $D_i$ between any satellite and the receiver station can be derived from the following equation:

$$D_i = \{(x_i - x)^2 + (y_i - y)^2 + (z_i - z)^2\}^{1/2} \quad \dots \text{(1)}$$

In addition, the distance $D_i$ between the satellite at the coordinate position $P_i$ ($x_i$, $y_i$, $z_i$) and the receiver station can be measured directly in terms of the propagation delay time $T_i$ of electromagnetic signals between the satellite and the receiver station, as follow:

$$D_i = T_i \cdot c \qquad \dots \dots \dots \text{(2)}$$
where c is the speed of light.

The following expression can be established derived from equations (1) and (2):

$$\{(x_i - x)^2 + (y_i - y)^2 + (z_i - z)^2\}^{1/2} = T_i \cdot c \quad \dots \text{(3)}$$

In practice, the propagation delay time $T_i$ can be derived by reference to an epoch signal which is broadcast by each satellite every 6 sec. starting at 00:00:00 every Sunday. By comparing the clock time measured by a clock in the receiver with the broadcast epoch, the delay time $T_i$ can be read directly. However, since the receiver clock will have some finite epoch error, the actual propagation delay time $T_i$ must be corrected for the error t of the receiver clock. Therefore, the actual propagation delay time $T_i$ can be derived from the following equation:

$$T_i = T_{mi} - t$$

where $T_{mi}$ is the propagation delay time derived from the difference between the satellite epoch and the receiver epoch; and t is epoch error in the receiver clock.

Thus, equation (3) can be modified as follows:

$$(x_i - x) + (y_i - y) + (z_i - z) = (T_{mi} - t).c \quad .... (4)$$

Equation (4) includes the four unknowns x, y, z and t. Therefore, by establishing a system of four equations (4) for four signals from four different satellite, the position of the receiver station P(x, y, z) can be obtained.

In this way, the position of the receiver can be derived by arithmetic operation on the data contained in the signal transmitted from satellites. However, since the satellite do not follow perfectly elliptical orbits, the position of the satellite resulting from these arithmetic operations will have some error. In addition, the measurement of the propagation delay time is performed with a resolution of 20 nsec. Therefore, the resultant position of the receiver station cannot be perfectly accurate. In order to minimize the error in the resultant position of the receiver station, it would be better to have more than four equations involving more than four signals from different satellites.

However, even after all 18 GPS satellites are in place, a single receiver will not be able to receive signals from all 18 satellites. In practice, the signals from 6 to 7 satellites could be received after GPS is completed. Therefore, maximum possible number of the equations would be 6 or 7. This is not believed to be sufficient to derive the position of the receiver station with complete precision. This problem will be compounded by the lower number of satellites before completion. One approach to this problem is to accumulate data sampled at different times in order to set up a system of equations large enough to accurately specify the receiver station position. However, the relative error between the clocks in the satellites and the receiver clock tends to vary with time. Therefore, even this may not be accurate enough to derive the position of the receiver precisely.

## SUMMARY OF THE INVENTION

Therefore, it is an object of the invention to provide a GPS receiver which can derive its position accurately from data derived from fewer satellites required in the prior art.

Another and more specific object of the invention is to provide a GPS receiver which obviates the effect of epoch errors in clocks on satellites and in the receiver to enable use of data sampled at different times.

In order to accomplish the aforementioned and other objects, a GPS receiver, according to the invention, sets up an equation based on known position data and propagation delay time data transmitted from two satellites and received simultaneously, and independent of time epoch errors in the clocks of the satellites and the receiver. The receiver accumulates equations as data is received. The position of the receiver station can then be derived from the accumulated equations. In order to enable the foregoing process, the GPS receiver is provided with a timer which is reset at the timing of transmission of the epoch signals from satellites so as to measure the signal propagation interval by latching the timer value upon receipt of each satellite signal.

In practice, the receiver uses the following equations:

$$\{(x_{1j} - x)^2 + (y_{1j} - y)^2 + (z_{1j} - z)^2\}^{1/2} = T_{1j} \cdot c + t_j \cdot c$$
$$\{(x_{2j} - x)^2 + (y_{2j} - y)^2 + (z_{2j} - z)^2\}^{1/2} = T_{2j} \cdot c + t_j \cdot c$$

where $x_{1j}$, $y_{1j}$, $z_{1j}$ are known coordinates of a first satellite;

$x_{2j}$, $y_{2j}$, $z_{2j}$ are known coordinates of the second satellite;

$T_{1j}$ and $T_{2j}$ are respectively measured propagation delay times of the first and second satellite $t_j$ is a constant indicative of timing errors, and

c is the velocity of light.

The following equation results from the above equations:

$$\{(x_{1j} - x)^2 + (y_{1j} - y)^2 + (z_{1j} - z)^2\}^{1/2} -$$
$$\{(x_{2j} - x)^2 + (y_{2j} - y)^2 + (z_{2j} - z)^2\}^{1/2} =$$
$$(T_{1j} - T_{2j}) \cdot c$$

These equations are accumulated over several sampling periods. The receiver can then derive its position from a system using all of the equations accumulated.

This procedure cancels the effect of epoch errors between the satellites and the receiver by employing only known position data and the difference between the propagation intervals of two satellites, thus eliminating time-dependent errors. In addition, only two satellites are needed to set up the complete system.

According to one aspect of the invention, a system for determining the position of a stationary receiver station designed to receive signals from any or all of a plurality of satellites, the satellite signals encoded with data indicative of its position and of transmission timing of the signal, the system comprises first means, in the station, for receiving the signals transmitted from at least two of the satellites, second means for deriving the position data from the signals transmitted by the received satellite, third means for deriving the apparent distance between the station and each of the sattelites on the basis of the timing of reception of the encoded transmission timing data, fourth means, active when a predetermined reception condition is satisfied, for establishing at least one equation in the unknown positional coordinates of the station including the position data and the difference between the apparent distances to at least two satellites transmitted at the same time, fifth means for storing equations established by the fourth means, sixth means for deriving the positional coordinates of the station by solving the accumulated equations, and seventh means for displaying the derived positional coordinates of the station on a display.

In the preferred system, the fourth means has a timer measuring the intervals between the moments of reception of signals transmitted by different satellites. The system includes a plurality of channels in the station, each of which is adapted to process data encoded in the signal transmitted by one corresponding satellite, each of the channels including a second means and a third means. Each of the channels further comprises eighth means for synchronizing operation of the channel with the signal from the corresponding satellite.

The fourth means becomes active when at least two channels are synchronized with the signals from corresponding satellites.

According to another aspect of the invention, a system for determining the position of a stationary receiver station utilizing a global positioning system in which a plurality of orbitting satellites each transmit a signal encoded with data indicative of its position and of the transmission timing of the signal, comprises an antenna means, disposed in the station, for receiving the signal transmitted by the satellites, a receiver means having a plurality of channels, each adapted to derive the position of a corresponding satellite from the signal transmitted by the corresponding satellite and the apparent distance between the station and the corresponding satellite on the basis of the reception timing of the signal, the receiver means responding to a predetermined receiving condition by establishing at least one equation in the unknown positional coordinates of the station and including the positions of and the difference between the distances to at least two satellites derived from signals transmitted at the same time, the receiver further including a memory means for storing the equations and an arithmetic means for deriving the positional coordinates of the station by solving the accumulated equations, and a display means for displaying the derived positional coordinates of the station on a display.

According to a further aspect of the invention, in a global positioning system for determining the position of a stationary receiving station, which includes a plurality of orbiting satellites, each transmitting a signal encoded with data indicative of its position and indicative of the transmission timing of the signal, a method for determining the position of a stationary station comprising the steps of:

first step of receiving the signals transmitted from at least two of the satellites;

second step of deriving the position data from the signals transmitted by the received satellite;

third step of deriving the apparent distance between the station and each of the sattelites on the basis of the timing of reception of the encoded transmission timing data;

fourth step of detecting a predetermined reception condition is satisfied, for establishing at least one equation in the unknown positional coordinates of the station including the position data and the difference between the apparent distances to at least two satellites transmitted at the same time;

fifth step of storing equations established by the fourth means;

sixth step of deriving the positional coordinates of the station by solving the accumulated equations; and

seventh step of displaying the derived positional coordinates of the station on a display.

In the fourth step, the interval between reception of signals from two different satellites is measured to derive the difference between the distances to those two satellites.

The method includes a step of providing a plurality of channels in the station, each of which is adapted to process data encoded in the signal transmitted by one corresponding satellites.

The method further comprises a step of synchronizing each of the channels with the signal from the corresponding satellite.

The fourth step is performed when at least two channels are synchronized with the signals from corresponding satellites.

BRIEF DESCRIPTION OF THE DRAWINGS

The present invention will be understood more fully from the detailed description given herebelow and from the accompanying drawings of the preferred embodiment of the present invention, which, however, should not be taken to limit the invention to the specific embodiment but are for explanation and understanding only.

In the drawings:

Fig. 1 is a block diagram of the preferred embodiment of a GPS receiver according to the invention; and

Fig. 2 is a flowchart of operation of the preferred embodiment of the GPS receiver of Fig. 1.

## DESCRIPTION OF THE PREFERRED EMBODIMENT

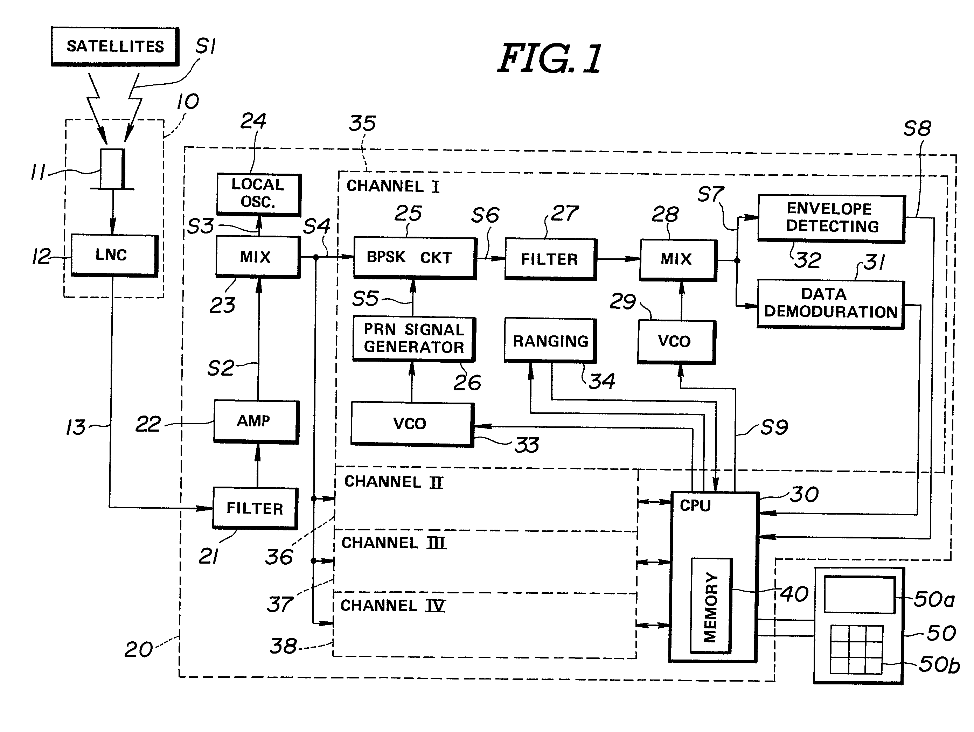

Referring now the drawings, particularly to Fig. 1, the preferred embodiment of a GPS receiver generally comprises an antenna section 10, a main section 20 and a display section 50.

Each of a plurality of satellites (not shown) is adapted to transmits a spectrum diffusion signal at a frequency 1575.42 MHz encoded with its own known position and with transmission timing indicative data. Spectrum diffusion, is performed by means of a C/A mode pseudo-random-noise (PRN) signal employing a 1023-bit gold code.

The antenna section 10 comprises an antenna 11 and a low-noise converter (LNC) 12. The antenna 11 has hemispherical directivity for receiving the spectrum diffusion signals $S_1$ from the satellites. The LNC 12 converts the spectrum diffusion signal $S_1$ into a signal $S_2$ with a first intermediate frequency of 75.42 MHz. The LNC 12 sends the converted signal $S_2$ to the main section 20 through a coaxial cable 13.

The main section 20 has a filter 21, an amplifier 22 and a mixer 23. The first intermediate frequency signal $S_2$ from the LNC 12 is sent to the mixer 23 through the filter 21 and the amplifier 22. The mixer 23 is also connected to a local oscillator 24 which produces a local frequency $S_4$ of 64.72 MHz. The mixer 23 converts the first intermediate frequency signal $S_2$ into a second intermediate frequency signal $S_4$

of 10.7 MHz by mixing the first intermediate frequency signal with the local oscillation signal $S_3$ from the local oscillator 24. The mixer 23 feeds the second intermediate frequency signal $S_4$ to all four channels 35, 36, 37 and 38 of a data sampling circuit. Each of the data sampling channels 35, 36, 37 and 38 serves as a data processing section for picking out the known position data and the propagation delay time data.

By utilizing the second intermediate frequency signal $S_4$ with the frequency of 10.7 MHz, parts conventionally used for radio broadcasting receiver can be utilized in the GPS receiver. This would clearly minimize the manufacturing cost of the receiver.

All channels of the data sampling circuit 35, 36, 37 and 38 have essentially the same circuitry. Therefore, only the first channel 35 is illustrated in detail. A BPSK circuit 25 built into each channel receives the second intermediate frequency signal $S_4$ from the mixer 23. The BPSK circuit 25 is also connected to a PRN signal generator 26 to receive a false signal $S_5$ in the form of a PRN signal. Utilizing the false signal from the PN signal generator 26, the BPSK circuit 25 translates the second intermediate frequency signal $S_4$ to a phase-shift keying (BPSK) signal $S_6$. This BPSK signal $S_6$ is Doppler-shifted due to the rotation of the Earth and of the satellite. Therefore, the center frequency of the BPSK signal fluctuates over a range of $\pm$ 5 MHz. The BPSK signal $S_6$ is sent through a filter 27 which has a pass-band at 10 MHz to a mixer 28. The mixer 28 converts the BPSK signal $S_6$ into a third intermediate frequency signal $S_7$ at 455 MHz. In order to perform this conversion, the mixer 28 is connected to an oscillator 29. The oscillator 29 is in particular a voltage-controlled oscillator producing a local oscillation signal centered at 10.245 MHz. In the shown embodiment, the central frequency of the local oscillation frequency is variable over a range of $\pm$ 5 MHz. The central frequency of the voltage-controlled oscillator 29 is controlled by a voltage control signal $S_9$ from CPU 30. The CPU derives the voltage control signal $S_9$ so that the third intermediate frequency is corrected based on the Doppler frequency of the satellite so as to cancel out the Doppler shift.

The third intermediate frequency signal $S_7$ is sent to a data demodulation circuit 31 and also to an envelope detecting circuit 32. The envelope detecting circuit 32 detects the envelope of the third intermediate frequency signal $S_7$ for use in synchronizing the first intermediate frequency signal $S_4$ from the antenna section 10 and the false signal $S_5$ from the PN signal generator 26. The envelope detecting circuit 32 derives a synchronization control signal $S_8$ for a voltage-controlled oscillator 33. The envelope detecting circuit 32 controls the voltage-controlled oscillator 33 through CPU 30. By synchronizing the first intermediate frequency signal $S_4$ and the false signal $S_5$, the envelope of the BPSK signal $S_6$ is maximized.

The data demodulation circuit 31 demodulates data including position data of the satellite from the BPSK signal $S_7$. The data demodulation circuit 31 sends the data derived from the BPSK signal to CPU 30.

CPU 30 derives the control signal $S_9$ from the data input from the data demodulation circuit 31 and sends the control signal to the voltage-controlled oscillator 29 to correct for Doppler shift. Therefore, the voltage-controlled oscillator 29, the mixer 28, the data demodulating circuit 31 and CPU 30 form a feedback loop for Doppler shift correction.

CPU 30 is also connected to a ranging circuit 34 which is adapted to derive the propagation delay

time data on the basis of PRN epoch in the signal transmitted from the satellite. CPU 30 issues a timing signal $S_{10}$ to start an internal timer (not clearly shown) at a given timing. The ranging circuit 34 receives the PRN epoch and derives the propagation delay time data on the basis of the timer value upon receipt of the PRN epoch. The ranging circuit 34 outputs the propagration delay time data to CPU 30.

CPU receives thus receives known position data and propagation delay time data from each of the spectrum back-diffusion circuits 35, 36, 37 and 38. Based on the known position data and the propagation delay time data received at the same time from different satellites, the CPU sets up an equation with the receiver position coordinates (x, y, z) as unknowns. CPU 30 has a memory 40 which stores or accumulates the equations thus established. CPU 30 also performs arithmetic operations on all of the accumulated expressions to derive the position of the receiver station. The resultant value indicative of coordinate of the position of the stationary station in the three dimensional coordinates taking the center of the Earth as the center, is translated into longitude, latitude and altitude. The data indicative of the determined position data in a form of longitude, latitude and altitude and/or in a form of aforementioned coordinate, is displayed on the display 50.

As seen from Fig. 1, the display 50 includes a display screen 50a and a mode selector 50b which is adapted to select one of the form of data to be displayed on the display screen.

Although the specific circuit construction of the preferred embodiment has been disclosed hereabove with reference to Fig. 1, the invention may be embodied otherwise to perform same or similar operation set out below. Equivalent NAVSTAR/GPS are given in NAVIGATION:

Journal of the Institute of Navigation, Volume 25, November 2, December 1978 (entire issue). The details of each component of the circuitry of the shown embodiment or the overall system of GPS disclosed in the above-identified publication is herein incorporated by reference. Also, incorportation by reference is made for the disclosure of equivalent circuit components as discussed in U. S. Patent 4,114,155, to Raab and U. S. Patent 4,445,118, to Taylor et al, for the sake of disclosure.

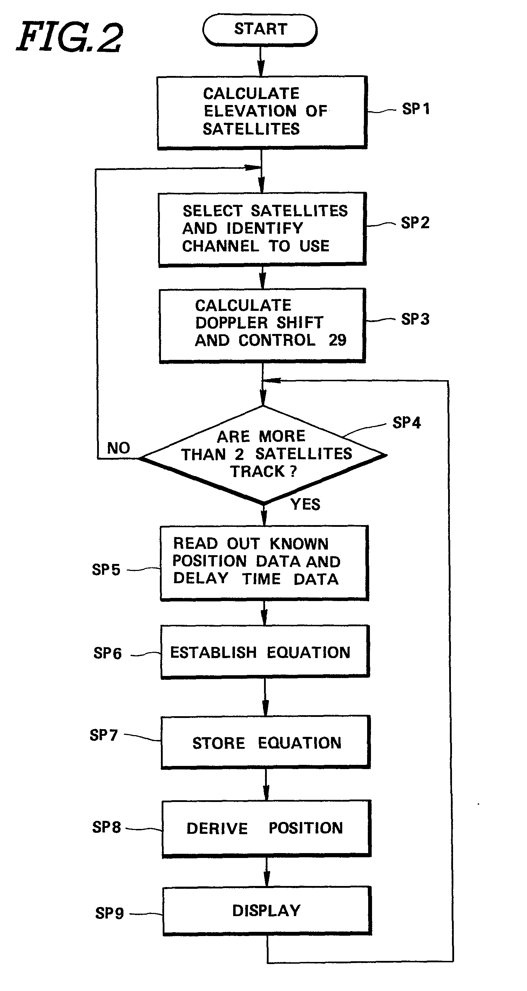

The operation of the preferred embodiment of GPS receiver according to the present invention, will be described below with reference to Fig. 2. First, the elevations of the various satellites over the horizon are derived in _per se_ well known manner on the basis of the previously stored data in the internal memory, at a step $SP_1$. Thereafter, the elevation of each satellite derived at the step $SP_1$ is compared with a predetermined threshold i.e. $5^\circ$, at a step $SP_2$. CPU 30 allocates one of the data sampling channels 35, 36, 37 and 38 to each satellite from which signal $S_1$ can be received, i.e. with an elevation $\geq 5^\circ$. The PRN signal generator 26 of each channel 35, 36, 37 and 38 generates a false signal with a unique value indicative of the corresponding satellite. At a step $SP_3$, the Doppler shift of each selected satellite is calculated and the control signal $S_9$ is produced. As set forth above, the control signal $S_9$ controls the voltage controlled oscillator 29 so as to eliminate Doppler shift from the third intermediate frequency signal $S_7$.

At a step 4, the CPU checks to ensure that at least two channels of the data sampling channels 35, 36, 37 and 38 are synchronized with the signals transmitted by corresponding satellites. If fewer than two channels are in use, in other words, if fewer than two satellites are being tracked, the loop comprising steps $SO_2$, $SP_3$

and $SP_4$ is repeated until at least two satellites are being tracked. After at least two satellites are found, the known position data $(x_{ij}, y_{ij}, z_{ij})$ of the satellites is separated by the data demodulation circuit 31 and the propagation delay time data is derived by the ranging circuit 34 at a step $SP_5$.

Based on the position data and the propagation delay time data, CPU 30 establishes equations related to each satellite separately, at a step $SP_6$. Assuming three satellites are being tracked and the positional coordinates of the satellites are $(x_{1j}, y_{1j}, z_{1j})$, $(x_{2j}, y_{2j}, z_{2j})$ and $(x_{3j}, y_{3j}, z_{3j})$ and the propagation delay times are respectively $T_{1j}$, $T_{2j}$ and $T_{3j}$, the following three equations are established:

$$\{(x_{1j}-x)^2+(y_{1j}-y)^2+(z_{1j}-z)^2\}^{1/2} = T_{1j} \cdot c + t_j \cdot c \quad \ldots \quad (5)$$
$$\{(x_{2j}-x)^2+(y_{2j}-y)^2+(z_{2j}-z)^2\}^{1/2} = T_{2j} \cdot c + t_j \cdot c \quad \ldots \quad (6)$$
$$\{(x_{3j}-x)^2+(y_{3j}-y)^2+(z_{3j}-z)^2\}^{1/2} = T_{3j} \cdot c + t_j \cdot c \quad \ldots \quad (7)$$

where $t_j$ is a constant indicative of epoch error between the clocks in the satellite and the clock in the receiver.

From the equations (5) and (6) and equations (6) and (7), the following equations (8) and (9) can be derived:

$$\{(x_{1j}-x)^2+(y_{1j}-y)^2+(z_{1j}-z)^2\}^{1/2} -$$
$$\{(x_{2j}-x)^2+(y_{2j}-y)^2+(z_{2j}-z)^2\}^{1/2}$$
$$= T_{1j} \cdot c - T_{2j} c \quad \ldots \quad (8)$$

$$\{(x_{2j}-x)^2+(y_{2j}-y)^2+(z_{2j}-z)^2\}^{1/2} -$$
$$\{(x_{3j}-x)^2+(y_{3j}-y)^2+(z_{3j}-z)^2\}^{1/2}$$
$$= T_{2j} \cdot c - T_{3j} c \quad \ldots \quad (9)$$

As will be appreciated herefrom, the factor of the epoch error is eliminated from the equations (8) and (9). Since the epoch error is only the time-dependent unknown, the receiver station position can be derived from a system of equations employing values sampled at different times. Therefore, even if the number of equations that can be established at a given timing is less than that required to solve the equations for all unknowns, it is possible to solve for the positional unknowns by utilizing equations established at different times.

The equations established at the step $SP_6$ are transferred to the memory 40 at a step $SP_7$ for storage until enough equations are established. Thereafter, all of the equations stored in the memory 40 are read out at a step $SP_8$. Then, the equations are all processed at the step $SP_8$ to derive the position of the receiver station. In practice, the method of least squares can be used to minimize error. The derived Cartesian coordinates (x, y, z) of the receiver position can then be transformed into longitude, latitude and altitude values for the receiver station at the step $SP_8$. The final position data, i.e. longitude, latitude and altitude of the receiver position thus derived are then displayed on the display unit 50 at a step $SP_9$.

After the step $SP_9$, the process goes back to the step $SP_4$ again to ensure that at least two satellites are being tracked. If not, the loop of the steps $SP_2$, $SP_3$ and $SP_4$ is repeated until at least two satellites are found whereupon the steps $SP_5$ to $SP_9$ are again executed for the next epoch signal transmission.

Therefore, according to the invention, the position of the stationary station can be determined by utilizing at least two orbiting satellites.

In the specific embodiment of the GPS receiver, four data sampling channels are provided so that the receiver can receive signals from different four satellites at the same time. However, the number of channels is not intended to limit the specific number. Only the essential feature is that the receiver is provided with two or more channels to receive at least two signals from different two satellites. Therefore, the invention should be understood to include any possible embodiments and/or modifications of the embodiments to be embodied without departing from the principle of the invention.

## C L A I M S :

1.      A system for determining the position of a stationary receiver station designed to receive signals from any or all of a plurality of satellites, the satellite signals encoded with data indicative of its position and of transmission timing of said signal, c h a r a c t e r i z e d   b y

first means (19) in said station, for receiving said signals (S1) transmitted from at least two of said satellites;

second means (25,30,31) for deriving said position data from said signals transmitted by the received satellite;

third means (30,34) for deriving the apparent distance between said station and each of said sattelites on the basis of the timing of reception of said encoded transmission timing data;

fourth means (30) active when a predetermined reception condition is satisfied, for establishing at least one equation in the unknown positional coordinates of said station including said position data and the difference between the apparent distances to at least two satellites transmitted at the same time;

fifth means (40) for storing equations established by said fourth means;

sixth means for deriving the positional coordinates of the station by solving said accumulated equations; and

seventh means (50) for displaying the derived positional coordinates of said station on a display (50 a).

2.   The system as set forth in claim 1, c h a r a c t e r i z e d in that said fourth means has a timer measuring the intervals between the moments of reception of signals transmitted by different satellites.

3.      The system as set forth in claim 1, c h a r a c t e -

rized in that a plurality of channels/in said station, (35,36,37,38) each of which is adapted to process data encoded in the signal transmitted by one corresponding satellite, each of said channels including a second means and a third means.

4. The system as set forth in claim 3, characterized in that each of said channels/further comprises (35,36,37,38) eighth means/for synchronizing operation of the channel with the sig- (32,30,33,26) nal from the corresponding satellite.

5. The system as set forth in claim 4, characterized in that said fourth means/becomes active when at (30) least two channels/are synchronized with the signals from corres- (35,36,37,38) ponding satellites.

6. The system as set forth in claim 5, characterized in that said fourth means (30) establishes the following equation:

$$\{(x_{1j} - x)^2 + (y_{1j} - y)^2 + (z_{1j} - z)^2\}^{1/2} -$$
$$\{(x_{2j} - x)^2 + (y_{2j} - y)^2 + (z_{2j} - z)^2\}^{1/2} -$$
$$= (T_{1j} - T_{2j}).C$$

where C is a velocity of light, $(x_{1j}, y_{1j}, z_{1j})$ and $(x_{2j}, y_{2j}, z_{2j})$ are the positional coordinates of a first and a second satellite respectively, $(x, y, z)$ are the positional coordinates of the receiver station, and $(T_{1j} - T_{2j})$ is the difference between the reception times of signals transmitted at the same time by said first and second satellites.

7. A system for determining the position of a stationary receiver station utilizing a global positioning system in which a plurality of orbiting satellites each transmit a signal/encoded with data (S1) indicative of its position and of the transmission timing of said signal, c h a r a c t e r i z e d  b y an antenna means (10) disposed in said station, for receiving said signal (S1) transmitted by said satellites;

a receiver means (20) having a plurality of channels (35,36,37,38), each adapted to derive the position of a corresponding satellite from said signal transmitted by said corresponding satellite and the apparent distance between said station and said corresponding satellite on the basis of the reception timing of said signal, said receiver (20) means responding to a predetermined receiving condition by establishing at least one equation in the unknown positional coordinates of said station and including the positions of and the difference between the distances to at least two satellites derived from signals transmitted at the same time, said receiver further including a memory means (40) for storing said equations and an arithmetic means for deriving the positional coordinates of the station by solving said accumulated equations; and

a display means (50) for displaying said derived positional coordinates of said station on a display (50 a).

8. The system as set forth in claim 7, c h a - r a c t e r i z e d  i n  t h a t  said receiver means (20) has a timer measuring the intervals between the moments of reception of signals transmitted by different satellites.

9. The system as set forth in claim 7, c h a - r a c t e r i z e d  i n  t h a t  each of said channels (35,36,37,38) further comprises synchronization means for synchronizing operation of the channel with the signal from the corresponding satellite.

10. The system as set forth in claim 9, c h a - r a c t e r i z e d  i n  t h a t  said fourth means (30) becomes active when at least two channels (35,36,37,38) synchronized with the signals from corresponding satellites.

11.　　　The system as set forth in claim 10, c h a -
r a c t e r i z e d   i n   t h a t　said receiver means establishes
the following equation:

$$\{(x_{1j} - x)^2 + (y_{1j} - y)^2 + (z_{1j} - z)^2\}^{1/2} -$$
$$\{(x_{2j} - x)^2 + (y_{2j} - y)^2 + (z_{2j} - z)^2\}^{1/2} -$$
$$= (T_{1j} - T_{2j}).C$$

where C is a velocity of light, $(x_{1j}, y_{1j}, z_{1j})$ and $(x_{2j}, y_{2j}, z_{2j})$ are the positional coordinates of a first and a second satellite respectively, (x, y, z) are the positional coordinates of the receiver station, and $(T_{1j} - T_{2j})$ is the difference between the reception times of signals transmitted at the same time by said first and second satellites.

12.　　　In a global positioning system for determining the position of a stationary receiving station, which includes a plurality of orbiting satellites, each transmitting a signal encoded with data indicative of its position and indicative of the transmission timing of said signal, a method for determining the position of a stationary station is c h a r a c t e r i z e d   b y
　　　a first step of receiving said signals transmitted from at least two of said satellites;
　　　a second step of deriving said position data from said signals transmitted by the received satellite;
　　　a third step of deriving the apparent distance between said station and each of said sattelites on the basis of the timing of reception of said encoded transmission timing data;
　　　a fourth step of detecting a predetermined reception condition is satisfied, for establishing at least one equation in the unknown positional coordinates of said station including said position data and the difference between the apparent distances to at least two satellites transmitted at the same time;

a fifth step of storing equations established by said fourth means;

a sixth step of deriving the positional coordinates of the station by solving said accumulated equations; and

a seventh step of displaying the derived positional coordinates of said station on a display.

13. The method as set forth in claim 12, characterized in that in said fourth step, the interval between reception of signals from two different satellites is measured to derive the difference between the distances to those two satellites.

14. The method as set forth in claim 12, characterized by a step of providing a plurality of channels(35,36,37,38) in said station, each of which is adapted to process data encoded in the signal transmitted by one corresponding satellites.

15. The method as set forth in claim 14, characterized by a step of synchronizing each of said channels (35,36,37, 38) with said signal from the corresponding satellite.

16. The method as set forth in claim 15, characterized in that said fourth step is performed when at least two channels are synchronized with the signals from corresponding satellites.

17. The method as set forth in claim 16, characterized in that the following equation is established in said fourth step:

$$\{(x_{1j} - x)^2 + (y_{1j} - y)^2 + (z_{1j} - z)^2\}^{1/2} -$$
$$\{(x_{2j} - x)^2 + (y_{2j} - y)^2 + (z_{2j} - z)^2\}^{1/2} -$$
$$= (T_{1j} - T_{2j}).C$$

where C is a velocity of light, $(x_{1j}, y_{1j}, z_{1j})$ and $(x_{2j}, y_{2j}, z_{2j})$ are the positional coordinates of a first and a second satellite respectively, (x, y, z) are the positional coordinates of the receiver station, and $(T_{1j} - T_{2j})$ is the difference between the reception times of signals transmitted at the same time by said first and second satellites.

0166300

1/2

FIG.1

0166300

*FIG.2*

```
        ┌──────────┐
        │  START   │
        └────┬─────┘
             │
             ▼
   ┌──────────────────┐
   │   CALCULATE      │
   │  ELEVATION  OF   │──── SP1
   │   SATELLITES     │
   └────────┬─────────┘
            │
            ▼
   ┌──────────────────┐
   │ SELECT SATELLITES│
   │  AND IDENTIFY    │──── SP2
   │ CHANNEL TO USE   │
   └────────┬─────────┘
            │
            ▼
   ┌──────────────────┐
   │   CALCULATE      │
   │  DOPPLER SHIFT   │──── SP3
   │ AND CONTROL  29  │
   └────────┬─────────┘
            │
            ▼
   ╱◇───────────────◇╲
NO ◇   ARE MORE       ◇──── SP4
   ◇ THAN 2 SATELLITES◇
   ╲   TRACK ?       ╱
    ◇──────┬────────◇
           │ YES
           ▼
   ┌──────────────────┐
   │ READ OUT KNOWN   │
SP5│ POSITION DATA AND│
   │ DELAY  TIME DATA │
   └────────┬─────────┘
            │
            ▼
   ┌──────────────────┐
SP6│ ESTABLISH EQUATION│
   └────────┬─────────┘
            │
            ▼
   ┌──────────────────┐
SP7│  STORE  EQUATION │
   └────────┬─────────┘
            │
            ▼
   ┌──────────────────┐
SP8│  DERIVE   POSITION│
   └────────┬─────────┘
            │
            ▼
   ┌──────────────────┐
SP9│     DISPLAY      │
   └────────┬─────────┘
```